# EUROPEAN PATENT SPECIFICATION

(11) **EP 1 451 983 B1**
(45) Date of publication and mention of the grant of the patent: **09.02.2011**
(21) Application number: 02783944.8
(22) Date of filing: 15.11.2002
(51) Int. Cl.: H04L 12/56, H04L 29/06

(54) **PROCEDURES AND DEVICES FOR ROUTING OF DATA PACKETS**
PROZEDUREN UND EINRICHTUNGEN ZUM ROUTEN VON DATENPAKETEN
PROCEDES ET DISPOSITIFS DE ROUTAGE DE PAQUETS DE DONNEES

(30) Priority: 22.11.2001 SE 0103890
(43) Date of publication of application: 01.09.2004
(73) Proprietor: TELIASONERA AB, 106 63 Stockholm (SE)
(72) Inventor: NYCKELGARD, Sören, S-448 34 Floda (SE); OLSSON, Urban, S-431 46 Mölndal (SE)
(74) Representative: Hopfgarten, Nils
(86) International application number: PCT/SE2002/002084
(87) International publication number: WO 2003/045020

(56) References cited:
- EP-A1- 1 051 010
- EP-A2- 0 605 339
- US-A- 6 061 349
- US-A- 6 130 892
- P. SRISURESH, M. HOLDREGE: "IP Network Address Translation (NAT) Terminology and Considerations" THE INTERNET ENGINEERING TASK FORCE, vol. RFC, no. 2633, August 1999 (1999-08), pages 1-31, XP015008446

## Description

### TECHNICAL FIELD

The present invention relates to the field of data communication. More exactly the present invention relates to procedures and devices for routing of data packets.

### BACKGROUND OF THE INVENTION

A user of a terminal, for packet switches data communication, such as a portable computer, hand computer, mobile telephone, etc, can move physically and connect his/her terminal to different network segments. To make the packet switching data communication possible, the terminal must have an address, such as an IP-address in the case of data communication in a TCP/IP-network. The address is in an address field which is in the data packet. Data packets which are addressed to the terminal consequently contains/ includes the address of the terminal in a receiver address field, whereas data packets which are transmitted from the terminal contains the address of the terminal in a transmitter/sender address field.

Today there exist systems where as forwarding address is allocated in the network segment to which the user's terminal at the time being is connected. The forwarding address is from an address point of view connected/ associate to the network segment to which the users terminal is connected. For instance can the forwarding address be an address to a device in the network segment to
which the terminal at present is connected. The terminal further has an address in its home network. All data communication to the terminal is in these systems going via a connection node which is located in the home network. In the connection node the forwarding address then is known
and data packets to the terminal are forwarded to the forwarding address by tunneling, for instance by the data packet being assembled in a tunneling data packet which contains the forwarding address in a receiver address field.

Such tunneling also occurs on other occasions, such as when a data packet shall be transmitted to a terminal which is in a network segment to which its address is not connected. One problem with tunneling is that the tunneling data packets will be bigger than the original data packets because a new address head or other identification
information must be added to the packet. This results in a higher utilization of bandwidth and also can result in that a data packet will be bigger than what is allowed in the network segment through which it shall be transmitted, which in its turn can result in packet losses.

The patent document EP-A1-1 051 010 relates to mobile IP supporting quality of service for foreign network with foreign agent and plurality of mobile nodes. The document additionally relates to a method of directing an internet protocol IP packet to the mobile node, the IP packet having a header portion including the destinationaddress to which the IP packet is to be sent, the method comprising the steps of: receiving, in the home network, the IP packet including a destination address corresponding to the home address of the mobile node; modifying the IP packet by: removing the home address of the mobile node from the header portion of the IP packet and replacing it with the foreign agent care-of address; appending a mobile node identifier to the IP packet; and transmitting the modified Packet.

The document P. SRISURESH, M. HOLDREGE: "IP Network Address Translation (NAT) Terminology and Considerations", The Internet Engineering Task Force, vol. RFC, no. 2633, August 1999 (1999-08), pages 1-31, XP015008446, relates to a private network connected to a business partner through a VPN (virtual private network) which could employ traditional NAT to communicate with the partner. Likewise, it is possible to employ twice NAT, if the partner's address space overlapped with the private network. There could be a NAT device on one end of the tunnel or on both ends of the tunnel. In all cases, traffic across the VPN can be encrypted for security purposes. Security here refers to security for traffic across VPNs alone. End-to-end security requires trusting NAT devices within private network.

### SUMMARY OF THE INVENTION

The aim of the present invention is to eliminate problems with the known technology. This is achieved by procedures and devices according to the enclosed patent claims.

According to one aspect of the invention is provided a procedure for routing of a data packet which includes a first address in a destination address field and a first port number in a destination port field, from a first device in a first network segment to a second device in a second network segment. According to the procedure is in the first device received a second port number which in the second device is uniquely associated with the first address. Further, the data packet in the first device is modified, by the first address in the destination address field being replaced by/with the address of the second device and by the first port number in the destination port field being replaced with the second port number. The modified data packet then is transmitted from the first device to the second device.

Instead of reassembling the data packet or in any other way increase the size of the data packet at the routing, the first address is replaced with the address of the second device and the first port number in the original data packet is replaced with the second port number which in the second device uniquely identifies the first address. This results in that the modified data packet will have exactly the same size as the original data packet. Thus the bandwidth which is utilized at the transmission will be reduced in comparison with known technology. Further, the risk that data packets at increased size at tunneling would exceed a limit for packet size is eliminated. This is especially important when applications are used which maximize the size of the packets. The procedure according to the invention consequently provides both the advantage of more efficient bandwidth utilization and less packet losses due to exceeding the size limit for data packets.

The second port number is preferably allocated in the second device and is then transmitted from the second device to the first device.

In the second device then preferably the modified data packet is received and identified, by means of the second port number, that the modified data packet is associated with the first address. The second port number can be regarded as a pointer to a translation table in the second device. The pointer, however, is not added to the data packet but is placed in an existing field in the data packet. The modified data packet then can be restored by the address of the second device in the destination address field being replaced with the first address, for forwarding of the restored data packet to the first address.

If the address of the terminal is not known in the second device, preferably address information which includes the first address is transmitted from the first device to the second device.

According to a first embodiment the data packet which shall be routed further includes a second address in a source address field. The address information which is transmitted then preferably also includes the second address and the second address in the source address field is replaced at the modification with the address of the first device. In this case the second port number is uniquely associated with both the first address and the second address. The restoring of the modified data packet in the second device in this case preferably also includes replacement of the address of the first device in the source address field with the second address.

The first embodiment results in advantages in a network where data packets which have a source address which is not associated to a network segment are not allowed to be transmitted from the network segment. If the second address is associated to another network segment than the first network segment, the data packet in such a network would not be allowed to be transmitted from the first network segment. This is solved according to the first embodiment by the source address not being the second address but the address to the first device which is associated to first network segment. Thus the risk that packet losses due to that data packets which have a source address which is not associated to a network segment are not allowed to be transmitted from the network segment is eliminated.

According to the first embodiment preferably the modified data packet is received in the second device and is identified by means of the second port number, that the modified data packet is associated with the first address and the second address. The modified data packet is then restored by the address of the second device in the destination address field being replaced with the first address and by the address of the first device in the source address field being replaced with the second address, for forwarding of the restored data packet to the first address.

According to a second aspect of the invention a procedure is provided for routing of a modified data packet from a first device in a first network segment to a first address which is associated to the first network segment. According to the procedure a first port number is allocated which in the first device is uniquely associate with the first address, and the first port number from the first device is transmitted to a second device in a second network segment. In the first device the modified data packet is received which includes the address of the first device in a destination address field and the first port number in a destination port field. In the first device then is identified by means of the first port number that the modified data packet is associated with the first address. Further, in the first device the modified data packet is restored by the address of the first device in the destination address field being replaced with the first address. The restored data packet then is transmitted from the first device to the first address.

According to this aspect of the invention the modified data packet is restored with regard to the destination address, by the address of the first device being replaced with the first address. The first device can identify that a modified data packet, which has the address of the first device in a destination address field, is associated with a first address by means of the first port number, which uniquely identifies the first address in the first device. This results in that the received modified data packet can have exactly the same size as the original data packet. The procedure according to this aspect of the invention consequently provides both the advantage of more efficient bandwidth utilization and less packet losses due to exceeding the size limit for data packets.

According to a second embodiment is in the first device address information received which includes the first address and a second address from the second device. The modified data packet includes the address of the first device in a destination address field and the second an address of the second device in a source address field. The first port number which is allocated in the first device is uniquely associated with the first address and the second address. Further is, in the first device, identified by means of the first port number that the modified data packet is associated with the first address and the second address and the modified data packet is restored in the first device by the address of the first device in the destination address field being replaced with the first address and by the address of the second device in the source address field being replaced with the second address.

The second embodiment results in advantages in a network where data packets which have source address which is not associated to a network segment is not allowed to be transmitted from the network, segment. By the source address not being the second address but the address to the second device, the risk of packet losses is eliminated due to that data packets which have a source address which is not associated to a network segment are not allowed to be transmitted from the network segment. The identification of the second address is made by means of the first port number which is uniquely associated with the second address. The original address in the source address field, that is the second address, then can be added in/to the source address field at the restoring of the modified data packet.

According to a third aspect of the invention a system is provided for routing of a data packet which includes a35 first address in a destination address field, and a first port number in a destination port field, from a first network segment, which includes a first device, to a second network segment which includes a second device. The first device includes means for reception of a second port number which in the second device is uniquely associated with the first address. The first device further includes means for modification of the data packet by replacing the first address in the destination address field with the address of the second device and replacement of the first port number in the destination port field with the second port number, and means for transmission of the modified data packet from the first device to the second device.

According to a fourth aspect of the invention a system is provided for routing of a modified data packet to a first address which is associated to a first network segment, including a first device connectable to a second network segment. The first device includes means for allocation of a first port number which is uniquely associated with the first address and means for transmission of the first port number to a second device in the second network segment. The first device further includes means for reception of the modified data packet which includes the address of the first device in a destination address field and the first port number in a destination port field and means for identifying by means of the first port number that the modified data packet is associated with the first address. Further the first device includes means for restoring the data packet by replacement of the address of the first device in the destination address field with the first address and means for transmission of the modified data packet from the first device to the first address.

According to a fifth and a sixth aspect are provided by computer readable medina which include by computer executable instructions to a computer for execution of the steps in the procedures according to the first aspect respective the second aspect.

### BRIEF DESCRIPTION OF THE DRAWINGS

The invention now will be described in more detail in the following with reference to enclosed drawings, in which
Figure 1 shows a system in which the present invention with advantage can be applied,
Figure 2 shows an example of a data packet which can be routed according to the invention;
Figure 3 shows an example of a data packet which has been modified according to the invention;
Figure 4 shows an example of a data packet which has been restored according to the invention.

### DESCRIPTION OF PREFERRED EMBODIMENTS

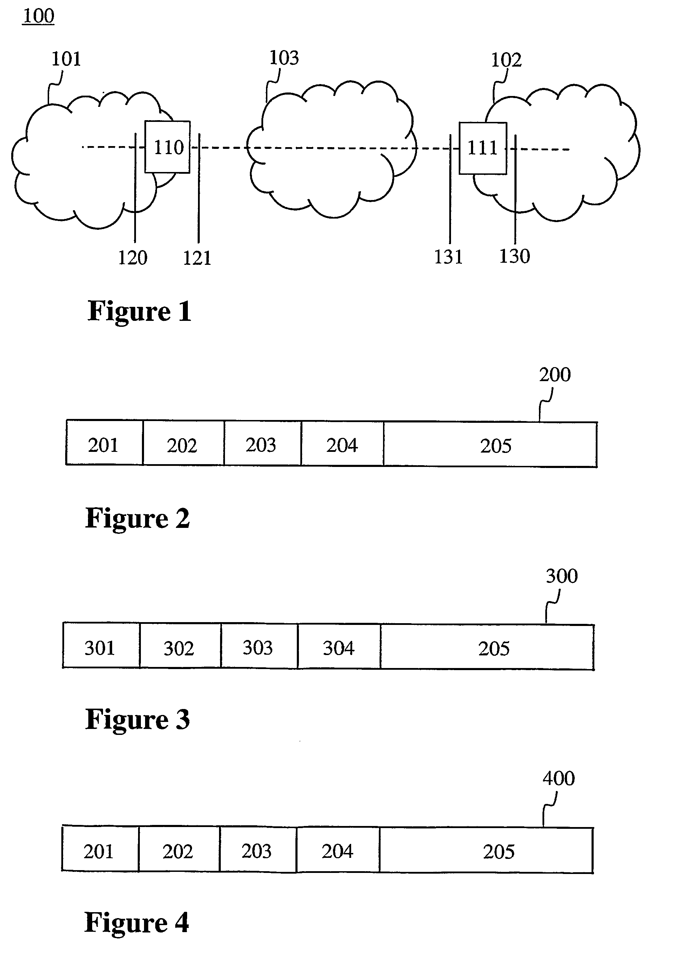

In Figure 1 a system 100 is shown in which the present invention can be applied with advantage. A first network segment 101 and a second network segment 102 are interconnected via a third network segment 103. In the first network segment 101 there is a first device 110 for routing of a data packet, such as a router in a TCP/IP-network, which is interconnected via the third network segment 103 with a second device 111 for routing of a data packet, such as a router in a TCP/IP-network, in the second network segment 102. The first device 110 has a first interface 120 towards the first network segment 101 and a second interface 121 towards the third network segment 103. Further, the second device 111 has a first interface 130 towards the second network segment 102 and a second interface 131 towards the third network segment 103. The two devices 110, 111 are interconnected via the second interface 121 for the first device 110 and the second interface 131 for the second device 111.

Below the routing of a data packet from the first device 110 to the second device 111 will be described with reference to the Figures 1-4. Note that the routing according to the invention is symmetric, which means that routing of a data packet from the second device 111 to the first device 110 is made/done in corresponding way.

In Figure 2 is schematically shown a data packet 200 which can be routed by the first device 110 and the second device 111. The data packet 200 includes a first port number 201 in a transmitter port field, a second port number 202 in a receiver port field, a first address 203 in a transmitter address field, a second address in a receiver address field and a payload 205 in a payload field.

In Figure 3 a data packet 300 is schematically shown which has been modified by the first device 110. The data packet 300 includes a third port number 301 in a transmitter port field, a fourth port number 302 in a receiver port field, a third address 303 in a transmitter address field, a fourth address 304 in a receiver address field and the payload 205 in a payload field. The third port number 301 is a port number which in the first device 110 is uniquely associated with the first port number 201, the second port number 202, the first address 203 and the second address 204. The fourth port number is a port number which in the second device 111 is uniquely associated with the first port number 201, the second port number 202, the first address 203 and the second address 204. The third address 303 is the address of the first device 110 and the fourth address 304 is the address of the second device 111. The payload 205 is the same as in the data packet 200 in Figure 2.

In figure 4 is schematically shown a data packet 400 which has been restored by the first device 110. The data packet 400 includes the first port number 201 in a transmitter/sender port field, the second port number 202 in a receiver port field, the first address 203 in a transmitter address field, the fourth address 204 in a receiver address field and the payload 205 in a payload field. The data packet 400 consequently is identical with the data packet in Figure 2.

The first device 110 receives a data packet 200 according to Figure 2 via the interface 120 and notes that a session has started. The first device then allocates a free port with the third port number 301 to the session on the interface 121 and transmits address information which includes the first port number 201, the second port number 202, she first address 203 and the second address 204, the third port number and its own address, that is the third address 303, to the second device 111. The third port number 301 is in the first device 110 uniquely associated with the first port number 201, the second port number 202, the first address 203 and the second address 204, that is to the session.

When the second device 111 receives the address information from the first device 110 it allocates a free port with the fourth port number 302 to the session and transmits this port number 302 to the first device 110. The fourth port number 302 is in the second devices 111 uniquely associated with the first port number 201, the second port number 202, the first address 203 and the second address 204, that is to the session.

When the first device 110 modifies the data packet 200 by replacing the first port number 201 in the transmitter port field with the third port number 301, by replacing the second port number 202 in the receiver port field with the fourth port number 302, by replacing the first address 203 in the transmitter address field with the address of the first device 303 and by replacing the second address 204 in the receiver address field with the address of the second device 304. The payload 205 is kept unchanged.

When the data packet 200 has been modified the modified data packet 300 is transmitted from the first device 110 to the second device 111.

The second device 111 receives the modified data packet 300 and identifies by means of the fourth port number 302 that the modified data packet is associated with the first port number 201, the second port number 202, the first address 203 and the second address 203. When this has been done, the second device can restore the modified data packet 300 by replacing the third port number 301 in the transmitter port field with the first port number 201, by replacing the fourth port number 302 in the receiver port field with the second port number 202, by replacing the address of the first device 303 in the transmitter address field with the first address 203 and by replacing the address of the second device 304 in the receiver address field with the second address 204. The payload 205 is kept unchanged.

The restored data packet 400 now is identical with the original data packet 200 and is transmitted from the second 15 device 111 to the second address.

When the session well is associated with a port number in both devices, data packets can be routed symmetrically between the two devices without the initiating transmission of port number and addresses, that is, only by modification of the data packets as above. Thus the second device 111 can transmit data packets to the first device, which data packets have the transmitter address and the receiver address reversed in comparison with the example above.

When a session is finished the two devices 110 and 111 make the ports 301 and 302 which have been associated with the session free.

The first device and the second device are preferably computers. At programming of instructions which instruct a computer to execute the procedure which is described is supposed that the expert in the field will select suitable tools for execution of such programming. The software then can be stored in any known way in the field, such as volatile or non-volatile memories which can be connected to a processor in the computer and can be read by the processor, such as a diskette or a CD-ROM etc.

## Claims

1. Procedure for routing of a data packet which includes a first address in a destination address field and a first port number in a destination port field, from a first device (110) in a first network segment (101) to a second device (111).in a second network segment (102), including the steps:
to receive, in the first device (110), a second port number which in the second device (111) is uniquely associated with the first address;
to modify, in the first device (110), the data packet by replacing the first address in the destination address field with the address of the second device (111) and by replacing the first port number in the destination port field with the second port number; and
to transmit the modified data packet from the first device (110) to the second device (111).

2. Procedure as claimed in patent claim 1, at which the second port number is allocated in the second device (111),
further including the step:
to transmit the second port number from the second device (111) to the first device (110).

3. Procedure as claimed in patent claim 2, further including the steps:
to receive, in the second device (111), the modified data packet;
to identify, in the second device (111), by means of the second port number, that the modified data packet is associated with the first address; and
to restore, in the second device (111), the modified data packet by replacing the address of the second device (111) in the destination address field with the first address, for forwarding of the restored data packet to the first address.

4. Procedure as claimed in patent claim 1 or 2, further including the step:
to transmit address information which includes the first address from the first device (110) to the second device (111).

5. Procedure as claimed in patent claim 4, at which the data packet which is received in the step to receive a data packet further includes a second address in a source address field,
the second port number which is received in the step to receive a second port number is uniquely associated with the first address and the second address,
address information which is transmitted in the step
to transmit address information further includes the second address; and
the modification in the step to modify the data packet further includes modification of the data packet by the second address in the source address field being replaced with the address of the first device (110).

6. Procedure as claimed in patent claim 5, further including the steps:
to receive, in the second device (111), the modified data packet;
to indentify, in the second device (111), by means of the second port number, that the modified data packet is associated with the first address and the second address; and
to restore the modified data packet in the second device (111) by replacing the address of the second device (111) in the destination address field with the first address, and by replacing the address of the first device (110) in the source address field with the second address, for forwarding of the restored data packet to the first address.

7. Procedure for routing of a modified data packet from a first device (110) in a first network segment (101) to a first address which is associate to the first network segment (101), including the steps:
to allocate, in the first device (110), a first port number which is uniquely associated with the first address; to transmit the first port number from the first device (110) to a second device (111) in a second network segment (102);
to receive, in the first device (110), receive the modified data packet which includes the address of the first device (110) in a destination address field and the first port number in a destination port field;
to identify, in the first device (110), by means of the first port number, that the modified data packet is associated with the first address;
to restore, in the first device (110), the modified data packet by replacing the address of the first device (110) in the destination address field with the first address; and
to transmit the restored data packet from the first device (110) to the first address.

8. Procedure as claimed in patent claim 7, further including the step:
to receive, in the first device (110), address information which includes the first address from the second device (111).

9. Procedure as claimed in patent claim 8, at which the modified data packet which is received in the step to receive the modified data packet further includes the address of the second device (111) in a source address field.
the first port number, which is allocated in the ste^{p} to allocate a first port number, is uniquely associated with the first address and the second address,
the address information which is transmitted in the step to transmit address information further includes a second address,
the identification in the step to identify further includes identification by means of the first port number of that the modified data packet is associated with the second address, and
the restoring in the step to restore thy modified data packet further includes restoring of the modified data packet by the address of the second device (111) in the source address field being replaced with the second address.

10. System for routing of a data packet which includes a first address in a destination address field and a first port number in a destination port field, from a first network segment. (101), which includes a first device (110), to a second network segment (102) which includes a second device (111), the first device (110) including:
means for reception of a second port number which in the second device (111) is uniquely associated with the first address;
means for modification of the data packet by replacement of the first address in the destination address field with the address of the second device (111), and replacement of the first port number in the destination port field with the second port number; and
means for transmission of the modified data packet from the first device (110) to the second device (111).

11. System as claimed in patent claim 10, at which the data packet further includes a second address in a source address field,
the means for reception is arranged to receive a second port number which in the second device (111) is uniquely associated with the first address and the second address,
and the means for modification is arranged to modify the data packet by the first address in the destination address field being replaced with the address of the second device (111), by the first port number in the destination port field being replaced with the second port number, and by the second address in the source address field being replaced with the address of the first device (110).

12. System for routing of a modified data packet to a
first address which is associated to/with a first network segment (101) including a first device connectable to a second network segment (102), the first device including:
means for allocation of a first port number which is uniquely associate with the first address;
means for transmission of the first port number to a second device in the second network segment (102);
means for reception of the modified data packet which includes the address of the first device in a destination address field and the first port number in a destination port field;
means for identifying by means of the first port number that the modified data packet is associated with the first address;
means for restoring the data packet by replacement of the address of the first device in the destination address field with the first address; and
means for transmission of the modified data packet from the first device to the first address.

13. System as claimed in the patent claim 12, at which the means for allocation is arranged to allocate a first port number which is uniquely associated with the first address and the second address;
the means for reception is arranged to receive the modified data packet which includes the address of the first device in a destination address field, the first port number in a destination port field and the address of the second device (111) in a source address field,
the means for identification is arranged to identify by means of the first port number that the modified data packet is associated with the first address and the second address, and
the means for restoring is arrange to restore the modified data packet by replacing the address of the first device in the destination address field with the first address, and by replacing the address of the second device (111) in the source address field with the second address.

14. A computer readable medium which includes computer executable instructions to a computer for execution of the steps in any of the patent claims 1-6.

15. A computer readable medium which includes computer executable instructions to a computer for execution of the steps in any of the patent claims 7-9.

## Patentansprüche

1. Prozedur zum Routen eines Datenpakets, das eine erste Adresse in einem Zieladressfeld und eine
erste Portnummer in einen Zielportfeld umfasst, von einer ersten Einrichtung (110) in einem ersten Netzsegment (101) an eine zweite Einrichtung (111) in einem zweiten Netzsegment (102), umfassend die folgenden Schritte:
Empfangen, in der ersten Einrichtung (110), einer zweiten Portnummer, die in der zweiten Einrichtung (111) eindeutig der ersten Adresse zugeordnet ist;
Modifizieren, in der ersten Einrichtung (110), des Datenpakets durch Ersetzen der ersten Adresse in dem Zieladressfeld durch die Adresse der zweiten Einrichtung (111) und durch Ersetzen der ersten Portnummer in dem Zielportfeld durch die zweite Portnummer; und
Senden des modifizierten Datenpakets von der ersten Einrichtung (110) an die zweite Einrichtung (111).

2. Prozedur nach Anspruch 1, bei der die zweite Portnummer in der zweiten Einrichtung (111) zugewiesen ist,
überdies umfassend folgenden Schritt:
Senden der zweiten Portnummer von der zweiten Einrichtung (111) an die erste Einrichtung (110).

3. Prozedur nach Anspruch 2, überdies umfassend die folgenden Schritte:
Empfangen, in der zweiten Einrichtung (111), des modifizierten Datenpakets;
Identifizieren, in der zweiten Einrichtung (111) mittels der zweiten Portnummer, dass das modifizierte Datenpaket der ersten Adresse zugehörig ist; und
Wiederherstellen, in der zweiten Einrichtung (111), des modifizierten Datenpakets durch Ersetzen der Adresse der zweiten Einrichtung (111) in dem Zieladressfeld durch die erste Adresse, zum Weiterleiten des wiederhergestellten Datenpakets an die erste Adresse.

4. Prozedur nach Anspruch 1 oder 2, überdies umfassend den Schritt:
Senden von Adressinformationen, die die erste Adresse von der ersten Einrichtung (110) zur zweiten Einrichtung (111) umfassen.

5. Prozedur nach Anspruch 4, bei der das Datenpaket, das in dem Schritt zum Empfangen eines Datenpakets empfangen wird, überdies eine zweite Adresse in einem Quelladressfeld umfasst,
die zweite Portnummer, die in dem Schritt zum Empfangen einer zweiten Portnummer empfangen wird, eindeutig der ersten Adresse und der zweiten Adresse zugehörig ist,
Adressinformationen, die in dem Schritt zum Senden von Adressinformationen gesendet werden, überdies die zweite Adresse umfassen; und
die Modifikation in dem Schritt zum Modifizieren des Datenpakets überdies die Modifikation des Datenpakets **dadurch** umfasst, dass die zweite Adresse in dem Quelladressfeld durch die Adresse der ersten Einrichtung (110) ersetzt wird.

6. Prozedur nach Anspruch 5, überdies umfassend die folgenden Schritte:
Empfangen, in der zweiten Einrichtung (111), des modifizierten Datenpakets;
Identifizieren, in der zweiten Einrichtung (111), mittels der zweiten Portnummer, dass das modifizierte Datenpaket der ersten Adresse und der zweiten Adresse zugehörig ist; und
Wiederherstellen des modifizierten Datenpakets in der zweiten Einrichtung (111) durch Ersetzen der Adresse der zweiten Einrichtung (111) in dem Zieladressfeld durch die erste Adresse, und durch Ersetzen der Adresse der ersten Einrichtung (110) in dem Quelladressfeld durch die zweite Adresse, zum Weiterleiten des wiederhergestellten Datenpakets an die erste Adresse.

7. Prozedur zum Routen eines modifizierten Datenpakets von einer ersten Einrichtung (110) in einem ersten Netzsegment (101) an eine erste Adresse, die dem ersten Netzsegment (101) zugehörig ist, umfassend die folgenden Schritte:
Zuordnen, in der ersten Einrichtung (110) einer ersten Portnummer, die eindeutig der ersten Adresse zugehörig ist;
Senden der ersten Portnummer von der ersten Einrichtung (110) an eine zweite Einrichtung (111) in einem zweiten Netzsegment (102);
Empfangen, in der ersten Einrichtung (110), des modifizierten Datenpakets, das die Adresse der ersten Einrichtung (110) in einem Zieladressfeld und die erste Portnummer in einem Zielportfeld umfasst;
Identifizieren, in der ersten Einrichtung (110), mittels der ersten Portnummer, dass das modifizierte Datenpaket der ersten Adresse zugehörig ist;
Wiederherstellen, in der ersten Einrichtung (110), des modifizierten Datenpakets durch Ersetzen der Adresse der ersten Einrichtung (110) in dem Zieladressfeld durch die erste Adresse; und
Senden des wiederhergestellten Datenpakets von der ersten Einrichtung (110) an die erste Adresse.

8. Prozedur nach Anspruch 7, überdies umfassend den Schritt:
Empfangen, in der ersten Einrichtung (110), von Adressinformationen, die die erste Adresse von der zweiten Einrichtung (111) umfassen.

9. Prozedur nach Anspruch 8, bei der das modifizierte Datenpaket, das in dem Schritt zum Empfangen des modifizierten Datenpakets empfangen wird, überdies die Adresse der zweiten Einrichtung (111) in einem Quelladressfeld umfasst,
die erste Portnummer, die in dem Schritt zum Zuordnen einer ersten Portnummer zugeordnet wird, eindeutig der ersten Adresse und der zweiten Adresse zugehörig ist,
die Adressinformationen, die in dem Schritt zum Senden von Adressinformationen gesendet werden, überdies eine zweite Adresse umfassen,
die Identifikation in dem Schritt zum Identifizieren überdies die Identifikation mittels der ersten Portnummer umfasst, dass das modifizierte Datenpaket der zweiten Adresse zugehörig ist, und
das Wiederherstellen in dem Schritt zum Wiederherstellen des modifizierten Datenpakets überdies das Wiederherstellen des modifizierten Datenpakets **dadurch** umfasst, dass die Adresse der zweiten Einrichtung (111) in dem Quelladressfeld durch die zweite Adresse ersetzt wird.

10. System zum Routen eines Datenpakets, das eine erste Adresse in einem Zieladressfeld und eine erste Portnummer in einem Zielportfeld umfasst, von einem ersten Netzsegment (101), das eine erste Einrichtung (110) umfasst, an ein zweites Netzsegment (102), das eine zweite Einrichtung (111) umfasst, wodurch die erste Einrichtung (110) umfasst:
Mittel zum Empfangen einer zweiten Portnummer, die in der zweiten Einrichtung (111) eindeutig der ersten Adresse zugehörig ist;
Mittel zum Modifizieren des Datenpakets durch Ersetzen der ersten Adresse in dem Zieladressfeld durch die Adresse der zweiten Einrichtung (111) und
Ersetzen der ersten Portnummer in dem Zielportfeld durch die zweite Portnummer; und
Mittel zum Senden des modifizierten Datenpakets von der ersten Einrichtung (110) an die zweite Einrichtung (111).

11. System nach Anspruch 10, bei dem das Datenpaket überdies eine zweite Adresse in einem Quelladressfeld umfasst,
das Mittel zum Empfangen angeordnet ist, eine zweite Portnummer zu Empfangen, die in der zweiten Einrichtung (111) eindeutig der ersten Adresse und der zweiten Adresse zugehörig ist,
und das Mittel zum Modifizieren angeordnet ist, das Datenpaket **dadurch** zu modifizieren, dass die erste Adresse in dem Zieladressfeld durch die Adresse der zweiten Einrichtung (111) ersetzt wird, dass die erste Portnummer in dem Zielportfeld durch die zweite Portnummer ersetzt wird, und dass die zweite Adresse in dem Quelladressfeld durch die Adresse der ersten Einrichtung (110) ersetzt wird.

12. System zum Routen eines modifizierten Datenpakets an eine erste Adresse, die einem ersten Netzsegment (101) zugehörig ist, umfassend eine erste Einrichtung, die an ein zweites Netzsegment (102) anschließbar ist, wobei die erste Einrichtung umfasst:
Mittel zum Zuordnen einer ersten Portnummer, die eindeutig der ersten Adresse zugehörig ist;
Mittel zum Senden der ersten Portnummer an eine zweite Einrichtung in dem zweiten Netzsegment (102);
Mittel zum Empfangen des modifizierten Datenpakets, das die Adresse der ersten Einrichtung in einem Zieladressfeld und die erste Portnummer in einem Zielportfeld umfasst;
Mittel zum Identifizieren mittels der ersten Portnummer, dass das modifizierte Datenpaket der ersten Adresse zugehörig ist;
Mittel zum Wiederherstellen des Datenpakets durch Ersetzen der Adresse der ersten Einrichtung in dem Zieladressfeld durch die erste Adresse; und
Mittel zum Senden des modifizierten Datenpakets von der ersten Einrichtung an die erste Adresse.

13. System nach Anspruch 12, bei dem das Mittel zum Zuordnen angeordnet ist, eine erste Portnummer zuzuordnen, die eindeutig der ersten Adresse und der zweiten Adresse zugehörig ist;
das Mittel zum Empfangen angeordnet ist, das modifizierte Datenpaket zu empfangen, das die Adresse der ersten Einrichtung in einem Zieladressfeld, die erste Portnummer in einem Zielportfeld und die Adresse der zweiten Einrichtung (111) in einem Quelladressfeld umfasst,
das Mittel zur Identifikation angeordnet ist, mittels der ersten Portnummer zu identifizieren, dass das modifizierte Datenpaket der ersten Adresse und der zweiten Adresse zugehörig ist, und
das Mittel zum Wiederherstellen angeordnet ist, das modifizierte Datenpaket durch Ersetzen der Adresse der ersten Einrichtung in dem Zieladressfeld durch die erste Adresse und durch Ersetzen der Adresse der zweiten Einrichtung (111) in dem Quelladressfeld durch die zweite Adresse wiederherzustellen.

14. Computerlesbares Medium, das computerausführbare Anweisungen an einen Computer umfasst, zum Ausführen der Schritte in einem beliebigen der Patentansprüche 1 - 6.

15. Computerlesbares Medium, das computerausführbare Anweisungen an einen Computer umfasst, zum Ausführen der Schritte in einem beliebigen der Patentansprüche 7 - 9.

## Revendications

1. Procédé de routage de paquets de données qui comprend une première adresse dans un champ d'adresse de destination et un
premier numéro de port dans un champ de port de destination, d'un premier dispositif (110) dans un premier segment de réseau (101) à un second dispositif (111) dans un second segment de réseau (102), comprenant les étapes consistant à :
recevoir, dans le premier dispositif (110), un second numéro de port qui, dans le second dispositif (111), est associé de manière unique à la première adresse ;
modifier, dans le premier dispositif (110), le paquet de données en remplaçant la première adresse dans le champ d'adresse de destination par l'adresse du second dispositif (111) et en remplaçant le premier numéro de port dans le champ de port de destination par le second numéro de port ; et
transmettre le paquet de données modifié du premier dispositif (110) au second dispositif (111).

2. Procédé selon la revendication 1, dans lequel le second numéro de port est attribué dans le second dispositif (111),
comprenant en outre l'étape consistant à :
transmettre le second numéro de port du second dispositif (111) au premier dispositif (110).

3. Procédé selon la revendication 2, comprenant en outre les étapes consistant à :
recevoir, dans le second dispositif (111), le paquet de données modifié ;
identifier, dans le second dispositif (111), au moyen du second numéro de port, que le paquet de données modifié est associé à la première adresse ; et
restaurer, dans le second dispositif (111), le paquet de données modifié en remplaçant l'adresse du second dispositif (111) dans le champ d'adresse de destination par la première adresse pour transférer le paquet de données restauré à la première adresse.

4. Procédé selon la revendication 1 ou 2, comprenant en outre l'étape consistant à :
transmettre des informations d'adresse qui comprennent la première adresse du premier dispositif (110) au second dispositif (111).

5. Procédé selon la revendication 4, dans lequel le paquet de données qui est reçu dans l'étape consistant à recevoir un paquet de données comprend en outre une seconde adresse dans un champ d'adresse source,
le second numéro de port qui est reçu dans l'étape consistant à recevoir un second numéro de port est associé de manière unique à la première adresse et à la seconde adresse,
des informations d'adresse qui sont transmises dans l'étape consistant à transmettre des informations d'adresse comprennent en outre la seconde adresse ; et
la modification dans l'étape consistant à modifier le paquet de données comprend en outre la modification du paquet de données en ce que la seconde adresse dans le champ d'adresse source est remplacée par l'adresse du premier dispositif (110).

6. Procédé selon la revendication 5, comprenant en outre les étapes consistant à :
recevoir, dans le second dispositif (111), le paquet de données modifié ;
identifier, dans le second dispositif (111), au moyen du second numéro de port, que le paquet de données modifié est associé à la première adresse et à la seconde adresse ; et
restaurer le paquet de données modifié dans le second dispositif (111) en remplaçant l'adresse du second dispositif (111) dans le champ d'adresse de destination par la première adresse, et en remplaçant l'adresse du premier dispositif (110) dans le champ d'adresse source par la seconde adresse, pour le transfert du paquet de données restauré à la première adresse.

7. Procédé de routage d'un paquet de données modifié d'un premier dispositif (110) dans un premier segment de réseau (101) vers une première adresse qui est associée au premier segment de réseau (101), comprenant les étapes consistant à :
attribuer, dans le premier dispositif (110), un premier numéro de port qui est associé de manière unique à la première adresse ;
transmettre le premier numéro de port du premier dispositif (110) à un second dispositif (111) dans un second segment de réseau (102) ;
recevoir, dans le premier dispositif (110), le paquet de données modifié qui comprend l'adresse du premier dispositif (110) dans un champ d'adresse de destination et le premier numéro de port dans un champ de port de destination ;
identifier, dans le premier dispositif (110), au moyen du premier numéro de port, que le paquet de données modifié est associé à la première adresse ;
restaurer, dans le premier dispositif (110), le paquet de données modifié en remplaçant l'adresse du premier dispositif (110) dans le champ d'adresse de destination par la première adresse ; et
transmettre le paquet de données restauré du premier dispositif (110) à la première adresse.

8. Procédé selon la revendication 7, comprenant en outre l'étape consistant à :
recevoir, dans le premier dispositif (110), des informations d'adresse qui comprennent la première adresse du second dispositif (111).

9. Procédé selon la revendication 8, dans lequel le paquet de données modifié qui est reçu dans l'étape consistant à recevoir le paquet de données modifié comprend en outre l'adresse du second dispositif (111) dans un champ d'adresse source,
le premier numéro de port, qui est attribué dans l'étape consistant à attribuer un premier numéro de port, est associé de manière unique à la première adresse et à la seconde adresse,
les informations d'adresse qui sont transmises dans l'étape consistant à transmettre des informations d'adresse comprennent en outre une seconde adresse,
l'identification dans l'étape consistant à identifier comprend en outre l'identification au moyen du premier numéro de port que le paquet de données modifié est associé à la seconde adresse, et
la restauration dans l'étape consistant à restaurer le paquet de données modifié comprend la restauration du paquet de données modifié en ce que l'adresse du second dispositif (111) dans le champ d'adresse source est remplacée par la seconde adresse.

10. Système de routage d'un paquet de données qui comprend une première adresse dans un champ d'adresse de destination et un premier numéro de port dans un champ de port de destination, d'un premier segment de réseau (101), qui comprend un premier dispositif (110), vers un second segment de réseau (102) qui comprend un second dispositif (111), le premier dispositif (110) comprenant :
un moyen de réception d'un second numéro de port qui, dans le second dispositif (111), est associé de manière unique à la première adresse ;
un moyen de modification du paquet de données par remplacement de la première adresse dans le champ d'adresse de destination par l'adresse du second dispositif (111), et le remplacement du premier numéro de port dans le champ de port de destination par le second numéro de port ; et
un moyen de transmission du paquet de données modifié du premier dispositif (110) au second dispositif (111).

11. Système selon la revendication 10, dans lequel le paquet de données comprend en outre une seconde adresse dans un champ d'adresse source,
le moyen de réception est agencé pour recevoir un second numéro de port qui, dans le second dispositif (111), est associé de manière unique à la première adresse et à la seconde adresse,
et le moyen de modification est agencé pour modifier le paquet de données en ce que la première adresse dans le champ d'adresse de destination est remplacée par l'adresse du second dispositif (111), en ce que le premier numéro de port dans le champ de port de destination est remplacé par le second numéro de port, et en ce que la seconde adresse dans le champ d'adresse source est remplacée par l'adresse du premier dispositif (110).

12. Système de routage d'un paquet de données modifié vers une
première adresse qui est associée à/avec un premier segment de réseau (101) comprenant un premier dispositif pouvant être connecté à un second segment de réseau (102), le premier dispositif comprenant :
un moyen d'attribution d'un premier numéro de port qui est associé de manière unique à la première adresse ;
un moyen de transmission du premier numéro de port à un second dispositif dans le second segment de réseau (102) ;
un moyen de réception du paquet de données modifié qui comprend l'adresse du premier dispositif dans un champ d'adresse de destination et le premier numéro de port dans un champ de port de destination ;
un moyen d'identification au moyen du premier numéro de port que le paquet de données modifié est associé à la première adresse ;
un moyen de restauration du paquet de données par remplacement de l'adresse du premier dispositif dans le champ d'adresse de destination par la première adresse ; et
un moyen de transmission du paquet de données modifié du premier dispositif à la première adresse.

13. Système selon la revendication 12, dans lequel le moyen d'attribution est agencé pour attribuer un premier numéro de port qui est associé de manière unique à la première adresse et à la seconde adresse ;
le moyen de réception est agencé pour recevoir le paquet de données modifié qui comprend l'adresse du premier dispositif dans un champ d'adresse de destination, le premier numéro de port dans un champ de port de destination et l'adresse du second dispositif (111) dans un champ d'adresse source,
le moyen d'identification est agencé pour identifier au moyen du premier numéro de port que le paquet de données modifié est associé à la première adresse et à la seconde adresse, et
le moyen de restauration est agencé pour restaurer le paquet de données modifié en remplaçant l'adresse du premier dispositif dans le champ d'adresse de destination par la première adresse, et en remplaçant l'adresse du second dispositif (111) dans le champ d'adresse source par la seconde adresse.

14. Support lisible par ordinateur qui comprend des instructions exécutables par ordinateur à un ordinateur pour l'exécution des étapes selon l'une quelconque des revendications 1-6.

15. Support lisible par ordinateur qui comprend des instructions exécutables par ordinateur à un ordinateur pour l'exécution des étapes selon l'une quelconque des revendications 7-9.
